# EUROPEAN PATENT APPLICATION

(11) **EP 4 557 467 A1**
(43) Date of publication of application: **21.05.2025**
(21) Application number: 23915328.1
(22) Date of filing: 12.01.2023
(51) Int. Cl.: H01M 50/15

(54) **BATTERY CELL, BATTERY AND ELECTRIC DEVICE**

(71) Applicant: Contemporary Amperex Technology (Hong Kong) Limited, Hong Kong (HK)
(72) Inventor: WU, Kai, Ningde, Fujian 352100 (CN); LI, Yao, Ningde, Fujian 352100 (CN); LI, Aixin, Ningde, Fujian 352100 (CN); GU, Mingguang, Ningde, Fujian 352100 (CN); CHEN, Xiaobo, Ningde, Fujian 352100 (CN); KE, Jianhuang, Ningde, Fujian 352100 (CN)
(74) Representative: Ran, Handong
(86) International application number: PCT/CN2023/071880
(87) International publication number: WO 2024/148557

(57) **Abstract**

Provided in the present application are a battery cell, a battery and an electric device. The battery cell comprises: a case having an accommodating space and an opening in communication with the accommodating space; an electrode assembly accommodated in the accommodating space; an end cap which closes the opening; electrode terminals, which are arranged on the case and electrically connected to the electrode assembly; and a pressure relief portion, which is arranged on the end cap and used for releasing internal pressure of the case. In the technical solution of the present application, the electrode terminals and pressure relief portion of the battery cell are arranged in different planes, which can lower the risk of a short circuit between the electrode terminals caused by the electrode terminals being electrically connected by conductive emissions discharged via the pressure relief portion during thermal runaway of the battery cell; in addition, the pressure relief portion is arranged on the separate end cap, which tends to be flat, and the thickness of the end cap can be adjusted according to design requirements of the pressure relief portion, which also provides the benefit of improving the machining precision of the pressure relief portion, thereby enhancing the overall structural and performance reliability of the pressure relief portion. By improving the reliability of the pressure relief portion, the performance reliability of the battery cell is further improved.

## Description

### Technical Field

The present application relates to the technical field of batteries, and particularly to a battery cell, a battery and an electrical device.

### Background

Energy conservation and emission reduction are the key to the sustainable development of the automobile industry. Electric vehicles have become an important part of the sustainable development of the automobile industry due to their advantages in energy conservation and environmental protection. For electric vehicles, battery technology is an important factor related to their development.

In battery technology, how to improve the reliability of batteries is a technical problem that needs to be solved urgently.

### Summary of the Invention

Embodiments of the present application provide a battery cell, a battery and an electrical device, which can effectively improve the service life of the battery.

In a first aspect, embodiments of the present application provide a battery cell, including: a case, having an accommodating space and an opening communicated with the accommodating space; an electrode assembly, accommodated in the accommodating space; an end cover, closing the opening; an electrode terminal, provided in the case, wherein the electrode terminal is electrically connected to the electrode assembly; and a pressure relief portion, provided in the end cover, wherein the pressure relief portion is configured to release an internal pressure of the case.

In the technical solution of the present application, the electrode terminal and the pressure relief portion of the battery cell are arranged on different surfaces. Compared with the structure in which the electrode terminal and the pressure relief portion are arranged on the same surface, the risk of the conductive discharge discharged through the pressure relief portion conducting the electrode terminal and causing the electrode terminal to short-circuit can be reduced when the battery cell is thermally runaway, thereby improving the performance stability of the battery cell; at the same time, the pressure relief portion is provided on a separate end cap that tends to be flat, and the difficulty of directly processing the pressure relief portion on the end cap is much less than the difficulty of processing the pressure relief portion on the wall portion of the case. The processing accuracy of the pressure relief portion is required to be high. The pressure relief portion is provided on the end cap that is easier to process, which is conducive to designing a pressure relief portion with a complex structure, and can improve the design flexibility and processing accuracy of the pressure relief portion. In addition, the case is formed by stamping, and each surface is limited by the stamping process, and the wall thickness of each surface is not much different. In order to avoid material waste and take into account the energy density of the battery cell, the wall portion of the case is thin, which is not conducive to improving the processing accuracy of the pressure relief portion. As a separate component, the end cap can be adjusted in thickness according to the design requirements of the pressure relief portion, which is also conducive to improving the processing accuracy of the pressure relief portion, and the structure and performance reliability of the pressure relief portion are improved as a whole. By improving the reliability of the pressure relief portion, the performance reliability of the battery cell is further improved.

According to some embodiments of the present application, a first groove is formed on a side of the end cover away from the electrode assembly, and the pressure relief portion is provided on a groove bottom wall of the first groove.

In the above technical solution, a first groove recessed toward the interior of the battery cell is provided on the side of the end cover away from the electrode assembly, and the pressure relief portion is provided on the bottom wall of the first groove. The pressure relief portion is provided in the concave area of the end cover, which can play a certain protective role for the pressure relief portion, reduce the risk of the pressure relief portion being worn or damaged by the external environment, thus reduce the risk of the pressure relief portion opening prematurely, and can reduce the risk of the pressure relief pressure required by the pressure relief portion rising due to the pressure relief portion being blocked by other components, thereby improving the functional stability of the pressure relief portion, and thus helping to improve the performance reliability of the battery cell during use.

According to some embodiments of the present application, the end cover includes a cover body and a first protrusion, the cover body is provided around the first protrusion, and the first protrusion protrudes from the cover body in a direction away from an interior of the case.

In the above technical solution, a first protrusion is provided on the side of the end cap facing away from the electrode assembly. In grouping of the battery, the first protrusion on the end cap and a box of the battery or other bearing components of the battery cell can be used to limit the battery cell by adopting a concave-convex matching structure, which is conducive to improving the positioning stability of the battery cell. According to some embodiments of the present application, the first protrusion includes a first top wall and a first side wall, the first side wall is arranged around the first top wall, the first side wall connects the first top wall and the cover body, and the first top wall and the first side wall enclose a first concave cavity communicated with the accommodating space.

In the above technical solution, the first concave cavity is formed at a position corresponding to the first protrusion on the inner surface (second surface) of the end cap facing the electrode assembly, which is conducive to expanding the internal space of the battery cell, increasing the effective volume of the battery cell without increasing the overall battery size, and is conducive to improving the energy density of the battery cell.

According to some embodiments of the present application, the pressure relief portion is provided on the first top wall.

In the above technical solution, the pressure relief portion is provided on the first top wall of the first protrusion. The interior of the first protrusion is a first concave cavity. The first concave cavity can play a certain convergence role, and when the battery cell has thermal runaway, the first concave cavity can provide a buffer zone for the discharge, which is conducive to the smooth discharging of the discharge, thereby helping to improve the performance reliability of the battery cell.

According to some embodiments of the present application, a first groove is formed on a side of the first top wall away from the interior of the case, and the pressure relief portion is provided on a groove bottom wall of the first groove.

In the above technical solution, the pressure relief portion is provided in the concave area on the first protrusion, which can play a certain protective role on the pressure relief portion, reduce the risk of the pressure relief portion being worn or damaged by the external environment, and thus reduce the risk of the pressure relief portion opening prematurely, and can reduce the risk of the pressure relief pressure required by the pressure relief portion rising due to the pressure relief portion being blocked by other components, thereby improving the functional stability of the pressure relief portion, and thus helping to improve the performance reliability of the battery cell during use.

According to some embodiments of the present application, the case includes a case body and a second protrusion, the case body is provided around the second protrusion, and the second protrusion protrudes from the case body in a direction away from an interior of the case.

In the above technical solution, the outer surface of the case is provided with a second protrusion. In grouping of the battery, the second protrusion on the case and the box of the battery or other peripheral components of the battery cell can be used to limit the battery cell by adopting a concave-convex matching structure, which is beneficial to improving the positioning stability of the battery cell.

According to some embodiments of the present application, the second protrusion includes a second top wall and a second side wall, the second side wall is arranged around the second top wall, the second side wall connects the second top wall and the first wall, and the second top wall and the second side wall enclose a second concave cavity communicated with the accommodating space.

In the above technical solution, a second concave cavity is formed at a position corresponding to the second protrusion on the inner surface of the case facing the electrode assembly, which is beneficial to expanding the internal space of the battery cell and increasing the effective volume of the battery cell without increasing the overall battery size, and is beneficial to improving the energy density of the battery cell.

According to some embodiments of the present application, the electrode terminal is provided on the first wall.

In the above technical solution, usually, the electrode terminal protrudes from the mounting surface, and the electrode terminal and the second protrusion are provided on the same wall portion of the case, which is conducive to making full use of the external space of the battery cell without increasing the peripheral size of the battery cell as much as possible, improving space utilization, and thus improving the energy density of the battery using the battery cell.

According to some embodiments of the present application, a height of the second protrusion protruding from the first wall is less than or equal to a height of the electrode terminal protruding from the first wall.

In the above technical solution, the height of the second protrusion protruding from the outer surface of the case is less than the height of the electrode terminal protruding from the outer surface of the case, which can reduce the risk of the second protrusion interfering with the electrode terminal, and reduce the risk of the second protrusion overlapping the current collector electrically connected to the electrode terminal, thereby reducing the risk of short-circuit caused by overlapping the current collector of the case, and improving the performance reliability of the battery cell.

According to some embodiments of the present application, two electrode terminals are provided, the two electrode terminals are provided at intervals on the first wall, and the second protrusion is located between the two electrode terminals.

In the above technical solution, the second protrusion is provided between the two electrode terminals, and the second protrusion fully utilizes the space between the two electrode terminals, further improving the rationality of space utilization.

According to some embodiments of the present application, the case includes a first wall, the electrode terminal is provided on the first wall, and the first wall is arranged opposite to the end cover.

In the above technical solution, the electrode terminal and the pressure relief portion are provided on opposite sides of the battery cell, and the pressure relief direction of the pressure relief portion is away from the electrode terminal, which further reduces the risk of the conductive discharge discharged through the pressure relief portion conducting to the electrode terminal and causing a short-circuit of the electrode terminal when the battery cell is thermally runaway, thereby improving the performance reliability of the battery cell.

According to some embodiments of the present application, the case includes a second wall and a third wall arranged opposite to each other, and two electrode terminals are provided, wherein one of the electrode terminals is provided on the second wall, and the other of the electrode terminals is provided on the third wall.

In the above technical solution, the two electrode terminals of the battery cell are provided on different surfaces, which is beneficial to improving the structural flexibility and structural diversity of the battery cell.

In a second aspect, the present application provides a battery, including the battery cell according to any one of the above items.

According to some embodiments of the present application, the battery further includes: a support member, provided on a side of the end cover away from the case, and the support member is configured to support the battery cell.

In the above technical solution, the battery is provided with a support member, and the support member carries and installs the battery monomer, which is beneficial to improving the structural stability of the overall structure of the battery.

According to some embodiments of the present application, a plurality of battery cells are provided, and the plurality of the battery cells are arranged along a first direction, and the support member is located on a side of the battery cell along a second direction, and the first direction is perpendicular to the second direction.

In the above technical solution, the battery is provided with a plurality of battery cells, and the plurality of the battery cells are arranged on the support member, which is beneficial to improving the structural integrity of the battery and the energy density of the battery.

According to some embodiments of the present application, the support member is formed with a second groove, and the second groove is communicated with a pressure relief port formed after the pressure relief portion is opened, and the second groove is configured to guide a discharge discharged from the pressure relief port to be discharged out of the battery.

In the above technical solution, the support member is provided on one side of the battery cell where the pressure relief portion is provided, and a second groove connected to the pressure relief port of the pressure relief portion is provided on the support member. The second groove can accommodate and guide the discharge discharged through the pressure relief portion, so that the discharge can be discharged normally through the pressure relief portion, thereby improving smoothness and orientation of pressure relief of the pressure relief portion, thereby improving the performance reliability of the battery.

According to some embodiments of the present application, the second groove is formed on a side of the support member away from the battery cell, and the support member is formed with a through hole, and the through hole communicates the pressure relief port with the second groove.

In the above technical solution, the second groove is formed on the side of the support member away from the battery cell, so that the support member can isolate the discharge and the battery cell in time, and the discharge discharged through the pressure relief portion can be discharged from the battery away from the battery cell, thereby reducing the risk of damaging the battery cell due to contact between the discharge and the battery cell, thereby improving the performance reliability of the battery.

According to some embodiments of the present application, the end cover includes a cover body and a first protrusion, the cover body is provided around the first protrusion, the first protrusion protrudes from the cover body in a direction away from an interior of the case, the first protrusion includes a first top wall and a first side wall, the first side wall is arranged around the first top wall, the first side wall connects the first top wall and the cover body, and the pressure relief portion is provided on the first top wall, wherein at least part of the first side wall is inserted into the through hole.

In the above technical solution, the pressure relief portion is provided on the first protrusion on the end cover and is located at the first top wall of the end of the first protrusion away from the end cover. At the same time, at least part of the first side wall of the first protrusion is inserted into the through hole on the support member. On the one hand, the insertion of the first side wall into the through hole of the support member can play a certain limiting role on the battery cell, thereby improving the stability of the relative position of the battery cell and the support member; on another hand, the first protrusion plays a certain guiding role in the pressure relief of the pressure relief portion, and can guide the discharge discharged from the pressure relief port to the second groove more fully, stably and quickly, thereby reducing the risk of the discharge being retained on the side of the support member facing the battery cell, and further improving the reliability of the battery; and on another hand, the insertion of the first protrusion into the through hole can play a certain role in blocking the through hole, at least can play a role in reducing the gap between the first protrusion and the through hole, thereby reducing the risk of the discharge discharged into the second groove flowing back through the through hole, which is also conducive to improving the reliability of the battery.

According to some embodiments of the present application, the first top wall protrudes from a groove bottom wall of the second groove.

In the above technical solution, the first top wall protrudes from the bottom wall of the second groove, and the pressure relief portion is provided on the first top wall, so that the pressure relief port of the pressure relief portion can be directly communicated with the second groove, further improving the stability of the battery cell limit while improving the adequacy of the guided discharging of the discharge, which is conducive to further improving the reliability of the battery.

According to some embodiments of the present application, a height of the first top wall protruding from the groove bottom wall of the second groove is less than a depth of the second groove.

In the above technical solution, the height of the first top wall protruding from the bottom wall of the second groove is less than the depth of the second groove, so that the pressure relief portion can be accommodated in the second groove. On the one hand, it is prevented that other structures outside the second groove block the pressure relief portion or block the pressure relief port of the pressure relief portion to affect the normal pressure relief of the pressure relief portion; on the other hand, the second groove can play a certain protective role on the pressure relief portion, reducing the risk of the pressure relief portion being worn or damaged by the external environment. The overall structure is conducive to improving the performance reliability of the battery during use.

According to some embodiments of the present application, a plurality of the battery cells and a plurality of the through holes are provided, and the through holes and the pressure relief portions of the battery cells are provided in one-to-one correspondence.

In the above technical solution, the pressure relief portions and the through holes are arranged in a one-to-one correspondence, which is beneficial to improving the smoothness of the pressure relief of all battery cells of the battery, and improving the flow conductivity of the second groove, reducing the risk of a large amount of discharge flowing back due to one through hole corresponding to a plurality of the pressure relief portions, thereby improving the reliability of the battery.

According to some embodiments of the present application, the plurality of the battery cells are arranged along a first direction, the second groove extends along the first direction, and at least one end of the second groove extends to an edge of the support member.

In the above technical solution, the second groove extends along the arrangement direction of the battery cells to the edge of the support member. On the one hand, one second groove can discharge the discharge corresponding to the plurality of the battery cells, which is beneficial to reduce the number of second grooves set on the support member. On the other hand, the second groove extends to the edge of the support member, which is convenient for the discharge in the second groove to be discharged from the battery in time, which is beneficial to improve the smooth of the pressure relief of the battery cell, thereby improving the reliability of the battery.

According to some embodiments of the present application, a heat exchange cavity for accommodating a heat exchange medium is provided in the support member.

In the above technical solution, a heat exchange cavity for accommodating a heat exchange medium is provided in the support member, and the support member can adjust the temperature of the battery cell while carrying the battery cell, which is also conducive to improving the performance reliability of the battery. In addition, the support member is provided on the side of the battery cell where the pressure relief portion is provided, and a cooling medium is accommodated in the support member, which can timely cool down the discharge discharged through the pressure relief portion, improve the pressure relief safety of the battery, and thus improve the performance reliability of the battery.

According to some embodiments of the present application, the support member is in a flat plate structure, and a thickness direction of the support member is parallel to a thickness direction of the end cover.

In the above technical solution, the support member is of a flat plate structure, which is beneficial to reducing the space occupied by the support member, and the flat plate structure support member can provide a larger bearing surface, which can increase the bearing capacity of the battery cell, and is overall beneficial to improving the energy density of the battery.

According to some embodiments of the present application, the battery further includes: a box, wherein the battery cell and the support member are received in the box.

In the above technical solution, the battery includes a box, which plays a role in storing and protecting the battery cells and the supporting members, thereby improving the structural integrity of the battery and improving the performance reliability of the battery.

In a first aspect, embodiments of the present application provide an electrical device, including the battery cell according to any one of the above items for providing electrical energy; or, including the battery according to any one of the above items for providing electrical energy.

### Description of Drawings

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural view of a vehicle provided in some embodiments of the present application.
Fig. 2 is an exploded view of a battery provided in some embodiments of the present application.
Fig. 3 is an exploded view of a battery cell provided in some embodiments of the present application.
Fig. 4 is a schematic structural diagram of an end cover of the battery cell shown in Fig. 3.
Fig. 5 is an exploded view of the end cover provided in some embodiments of the present application in some other embodiments.
Fig. 6 is a front sectional view of the battery cell shown in Fig. 5 in some embodiments;
Fig. 7 is a schematic structural diagram of the end cover of the battery cell shown in Fig. 5 in some embodiments;
Fig. 8 is a schematic structural diagram of the end cover of the battery cell shown in Fig. 5 in some other embodiments;
Fig. 9 is a front sectional view of the battery cell shown in Fig. 5 in some other embodiments;
Fig. 10 is an exploded view of a battery provided in some other embodiments of the present application;
Fig. 11 is a schematic structural diagram of a support member provided in some other embodiments of the present application;
Fig. 12 is a front sectional view of the support member and the battery cell in a separated state provided in some other embodiments of the present application;
Fig. 13 is a front sectional view of a portion of the first protrusion of the battery cell provided in some other embodiments of the present application inserted into the through hole of the support member;
Fig. 14 is a front sectional view of the first protrusion of the battery cell provided in some other embodiments of the present application protruding from the groove bottom wall of the second groove.

In the accompanying drawings, the drawings are not drawn according to the actual scale.

Explanation of reference numerals: 1000-vehicle; 100-battery; 10-box; 11-first part; 12-second part; 20-battery cell; 21-end cover; 211-cover body; 212-first protrusion; 2121-first top wall; 2122-first side wall; 213-first concave cavity; 214-first groove; 22-case; 221-first wall; 222-second protrusion; 2221-second top wall; 2222- second side wall; 223-second concave cavity; 224-accommodating space; 225-opening; 226-second wall; 227-third wall; 23-electrode assembly; 24-electrode terminal; 25-pressure relief portion; 251-notch; 30-support member; 31-second groove; 32-through hole; 33-heat exchange cavity; 200-controller; 300-motor; H1-height of the first top wall protruding from the bottom wall of the second groove; H2-depth of the second groove.

### Detailed Description

In order to make the objectives, technical solutions and advantages of the embodiments of the present application clearer, the technical solutions in the embodiments of the present application will be clearly and completely described below in conjunction with the drawings in the embodiments of the present application. It is apparent that the described embodiments are a part of the embodiments of the present application rather than all the embodiments. Generally, the components of the embodiments of the present application that are described and illustrated in the figures herein may be arranged and designed in a variety of different configurations.

Unless otherwise defined, all technical and scientific terms used in the present application have the same meaning as commonly understood by those skilled in the art belonging to the technical field of the present application. The terms used in the specification of the present application are intended only for the purpose of describing specific embodiments and are not intended to limit the present application. The terms "including" and "having" and any variations thereof in the specification and claims of the present application and in the description of drawings above are intended to cover non-exclusive inclusion. The terms "first", "second", and the like in the specification and claims of the present application or the above drawings are used for distinguishing different objects, rather than used for describing a specific order or primary and secondary relationship.

The reference to "embodiments" in the present application means that specific features, structures or characteristics described in conjunction with embodiments may be included in at least one embodiment of the present application. The appearance of this phrase in various places in the specification does not necessarily refer to the same embodiment, nor is it a separate or alternative embodiment that is mutually exclusive with other embodiments.

In description of the present application, it should be noted that, unless otherwise clearly specified and limited, the terms "install", "link", "connect", and "attach" should be understood in a broad sense, for example, it can be a fixed connection, a detachable connection, or an integral connection; it can be a direct connection, or an indirect connection through an intermediate medium, or it can be an internal communication of two elements. For those of ordinary skill in the art, the specific meanings of the above terms in the present application can be understood according to the specific circumstances.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals represent the same components. Moreover, for simplicity, in different embodiments, detailed descriptions of the same components are omitted. It should be understood that the thicknesses, lengths, widths and other sizes of various components in the embodiments of the present application shown in the drawings, as well as the overall thickness, length, width and other sizes of an integrated apparatus are only illustrative and should not constitute any restrictions on the present application.

The term "a plurality of" in the present application refers to two or more (including two).

In the present application, the battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application.

The battery mentioned in the embodiments of the present application refers to a single physical module including one or a plurality of battery cells to provide a higher voltage and capacity. For example, the battery mentioned in the present application may include a battery module, a battery pack, or the like. The battery generally includes a box for encapsulating one or a plurality of battery cells. The box can prevent liquids or other foreign matters from affecting the charging or discharging of the battery cell.

The battery cell includes an electrode assembly and an electrolyte solution, and the electrode assembly includes a positive electrode plate, a negative electrode plate and a separator. The battery cell operates mainly relying on movement of metal ions between the positive electrode plate and the negative electrode plate. The positive electrode plate includes a positive electrode current collector and a positive electrode active material layer, the positive electrode active material layer is coated on a surface of the positive electrode current collector, the positive electrode current collector which is not coated with the positive electrode active material layer protrudes from the positive electrode current collector coated with the positive electrode active material layer, and the positive electrode current collector which is not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, the negative electrode active material layer is coated on a surface of the negative electrode current collector, the negative electrode current collector which is not coated with the negative electrode active material layer protrudes from the negative electrode current collector which is coated with the negative electrode active material layer, and the negative electrode current collector which is not coated with the negative electrode active material layer is used as a negative tab. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together.

The separator may be made of polypropylene (PP), polyethylene (PE), or the like. In addition, the electrode assembly may be of a wound structure or a stacked structure, which is not limited in the embodiments of the present application.

With continuous development of battery technology, how to improve the reliability of batteries is a technical problem that needs to be solved urgently.

For general battery cells, the battery cells of the battery are usually assembled into electrode assemblies (bare cells) by winding or laminating the positive electrode plates, negative electrode plates and isolation membranes, and then loaded into the case, covered with end covers, and finally injected with electrolyte. The end covers of the battery cells usually cover the openings of the case. In order to facilitate the assembly of the battery cells, electrode terminals and pressure relief portions are usually provided on the end covers of the battery cells. The electrode terminals can be directly or indirectly connected to pole ears of the electrode assembly to realize electrical connection between the electrode terminals and the electrode assembly. The electrode terminals serve as output poles of the battery cells to realize input or output of electric energy of the battery cells. The pressure relief portion is configured to release pressure in the case.

However, the inventors of the present application have found that conductive material in discharge discharged through the pressure relief portion is easy to conduct the electrode terminal and cause a short-circuit, and the high-temperature and high-pressure discharge is easy to affect structural stability of the electrode terminal and current collector electrically connected to the electrode terminal, affecting performance reliability of the battery cell.

At the same time, the inventors found in experiment that if the pressure relief portion is set on the case so that the pressure relief portion and the electrode terminal are not on the same surface, although impact of the pressure relief portion on the structure and performance of the electrode terminal can be reduced, the problem of low performance reliability of the battery cell still exists. The inventors have deeply analyzed the reasons and found that: the case is in a hollow structure, and due to its structural limitations, it is difficult to process a complex structure on the case, that is, design of the pressure relief portion will be very limited, and it is impossible to process a complex structure on the case. In addition, the case is thinner than the end cover. If the pressure relief portion is set at a place with relatively weak strength, the reliability of the battery cell will be greatly reduced, and the processing accuracy of the pressure relief portion cannot be improved, which also affects the reliability of the battery cell.

Based on the above reasons, in order to further effectively improve the reliability of the battery, the inventor of the present application has designed a battery cell, wherein the electrode terminal of the battery cell is provided on the case, the pressure relief portion is provided on the end cover, and the pressure relief portion is configured to release the internal pressure of the case.

The electrode terminal and the pressure relief portion of the battery cell are provided on different surfaces. Compared with the structure in which the electrode terminal and the pressure relief portion are arranged on the same surface, the risk of the conductive discharge discharged through the pressure relief portion conducting the electrode terminal and causing the electrode terminal to short-circuit when the battery cell is thermally runaway can be reduced, thereby improving the performance stability of the battery cell.

At the same time, the pressure relief portion is arranged on a separate end cover that tends to be flat. The difficulty of directly processing the pressure relief portion on the end cover is much less than the difficulty of processing the pressure relief portion on the wall portion of the case. The processing accuracy of the pressure relief portion is required to be high. The pressure relief portion is provided on the end cover that is easier to process, which is conducive to designing a pressure relief portion with a complex structure and can improve the processing accuracy of the pressure relief portion. In addition, the case is formed by stamping, and the thickness of each surface is not much different due to the limitations of the stamping process. In order to avoid material waste and take into account the energy density of the battery cell, the wall portion of the case is thin, which is not conducive to improving the processing accuracy of the pressure relief portion. The end cover, as a separate component, can be adjusted in thickness according to the design requirements of the pressure relief portion, which is also conducive to improving the processing accuracy of the pressure relief portion and improving the structure and performance reliability of the pressure relief portion as a whole. By improving the reliability of the pressure relief portion, the performance reliability of the battery cell is further improved.

The battery cells disclosed in the embodiments of the present application can be used, but not limited to, in electrical devices such as vehicles, ships or aircraft. A power supply system including the battery cells, batteries, etc. disclosed in the present application can be used.

The embodiment of the present application provides an electric device using a battery as a power source, and the electric device may be, but is not limited to, a mobile phone, a tablet, a laptop computer, an electric toy, an electric tool, a battery car, an electric car, a ship, a spacecraft, and the like. Herein, the electric toy may include a fixed or mobile electric toy, for example, a game console, an electric car toy, an electric ship toy, and an electric airplane toy, and the like, and the spacecraft may include an airplane, a rocket, a space shuttle, and a spacecraft, and the like.

For the convenience of explanation, the following embodiments are described by taking the electric device as a vehicle 1000 as an example.

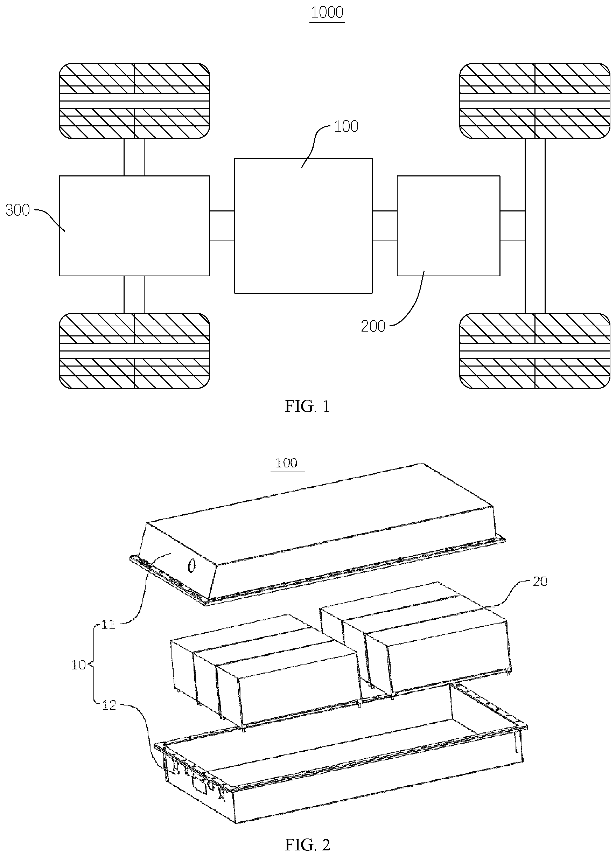

Referring to Fig. 1, Fig. 1 is a schematic structural view of a vehicle 1000 provided in some embodiments of the present application. The vehicle 1000 may be a fuel vehicle, a gas vehicle or a new energy vehicle which may be a pure electric vehicle, a hybrid vehicle or an extended-range vehicle, etc. A battery 100 is arranged inside the vehicle 1000, and the battery 100 may be arranged at the bottom, head or tail of the vehicle 1000. The battery 100 may be configured to supply power to the vehicle 1000. For example, the battery 100 may be used as an operational power supply of the vehicle 1000. The vehicle 1000 may further include a controller 200 and a motor 300. The controller 200 is configured to control the battery 100 to supply power to the motor 300, so as to meet the working power demand for starting, navigation and driving of the vehicle 1000.

In some embodiments of the present application, the battery 100 not only may serve as an operational power supply of the vehicle 1000, but also may serve as a driving power supply of the vehicle 1000, thus replacing or partially replacing fuel or natural gas to provide driving power for the vehicle 1000.

Referring to Fig. 2, Fig. 2 is an exploded view of a battery 100 provided in some embodiments of the present application. The battery 100 includes a box 10 and a battery cell 20, and the battery cell 20 is configured to be accommodated in the box 10. Herein, the box 10 is configured to provide accommodating space for the battery cell 10, and the box 10 may be of various structures. In some embodiments, the box 10 may include a first part 11 and a second part 12, the first part 11 and the second part 12 cover each other, and the first part 11 and the second part 12 jointly define an assembly space for accommodating the battery cell 20. The first part 11 may be of a hollow structure with one side open, the second part 12 may be of a platelike structure, and the opening side of the second part 12 covers the opening side of the first part 11, so that the first part 11 and the second part 12 jointly define the assembly space; the first part 11 and the second part 12 may also be of a hollow structure with one side open, and the opening side of the first part 11 covers the opening side of the second part 12. Certainly, the box 10 formed by the first part 11 and the second part 12 can be in various shapes, such as a cylinder, a cuboid, etc.

There may be a plurality of battery cells 20 in the battery 100. The plurality of the battery cells 20 may be connected in series or parallel or a mixed connection, where the mixed connection means that the plurality of the battery cells 20 are connected in both series and parallel. The plurality of the battery cells 20 may be connected in series or parallel or parallel-series connection, and then, the whole formed by the plurality of the battery cells 20 is accommodated in the box 10; certainly, the battery 100 may also be made in a manner that a battery module is firstly formed by connecting the plurality of the battery cells 20 in series, in parallel or in the mixed connection, and then a plurality of the battery modules are then connected in series, in parallel or in the mixed connection to form a whole and accommodated in the box 10 .

Herein, each battery cell 20 may be a secondary battery or a primary battery; it may also be a lithium-sulfur battery, a sodium-ion battery or a magnesium-ion battery, but is not limited thereto. The battery cell 20 may be cylindrical, flat, rectangular or in other shapes.

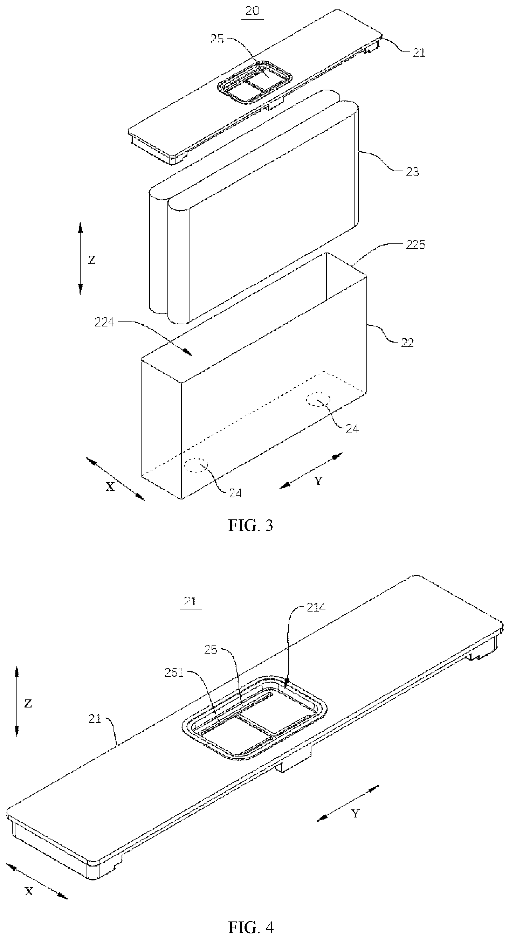

Referring to Fig. 3, Fig. 3 is an exploded view of a battery cell provided in some embodiments of the present application. The battery cell 20 may include a case 22, an end cover 21, an electrode assembly 23, an electrode terminal 24 and a pressure relief portion 25. The case 22 has an accommodating space 224 and an opening 225 communicating with the accommodating space 224. The electrode assembly 23 is accommodated in the accommodating space 224. The end cap 21 closes the opening 225. The electrode terminal 24 is disposed in the case 22. The electrode terminal 24 is electrically connected to the electrode assembly 23. The pressure relief portion 25 is disposed on the end cap 21. The pressure relief portion 25 is configured to release the internal pressure of the case 22.

The electrode assembly 23 is a component in which an electrochemical reaction occurs in the battery cell 10. A main body of the electrode assembly 23 may include a positive electrode plate, a negative electrode plate and a separator. The main body portion of the electrode assembly 2 may be a wound structure formed by winding the positive electrode plate, the separator and the negative electrode plate, or may be a stacked structure formed by stacking the positive electrode plate, the separator and the negative electrode plate. The electrode assembly 23 may also include a positive electrode tab and a negative electrode tab extending from the main body portion.

The case 22 provides an accommodating space 224 for members such as the electrode assembly 23 and the electrolyte. The end cap 21 may be in a flat plate structure or a structure tending to be flat. The case 22 and the end cap 21 together enclose a closed cavity for placing members such as the electrode assembly 23 and the electrolyte.

The electrode terminal 24 is disposed in the case 22 and connected to the electrode assembly 23 in the case 22. Each battery cell 20 may be provided with two electrode terminals 24, the two electrode terminals 24 being a positive terminal and a negative terminal, respectively. The positive terminal is connected to the positive electrode tab of the electrode assembly 23, and the negative terminal is connected to the negative electrode tab of the electrode assembly 23. Based on the different structures of the case 22, the electrode terminals 24 may be disposed on the same wall portion of the case 22, or on different wall portions of the case 22.

The pressure relief portion 25 refers to an element, component or structure that is actuated to release the internal pressure or temperature of the battery cell 20 when the internal pressure or temperature reaches a certain value. The pressure relief portion 25 can be a structure such as an explosion-proof valve, an air valve, a pressure relief valve or a safety valve installed on the end cover 21. Certainly, the pressure relief portion 25 can also be a structure with a local thickness reduction provided on the end cover 21, so that the pressure relief portion 25 forms a weak area in the area with a reduced thickness. When the battery cell 20 has a thermal runaway, the pressure relief portion 25 can tear, crack, break, etc. in the area with a reduced thickness to form a pressure relief port for internal pressure or temperature relief. The high-temperature and high-pressure substances inside the battery cell 20 will be discharged from the pressure relief port to the outside of the battery cell 20 as discharge, so that the battery cell 20 will be relieved of pressure and temperature, thereby improving the performance reliability of the battery cell 20.

Herein, the discharge includes but is not limited to: electrolyte, dissolved or split positive and negative electrode tabs, fragments of the isolation membrane, high-temperature and high-pressure gas generated by the reaction, flame, etc.

The electrode terminal 24 and the pressure relief portion 25 of the battery cell 20 are arranged on different surfaces. Compared with the structure in which the electrode terminal 24 and the pressure relief portion 25 are arranged on the same surface, the risk of the conductive discharge discharged through the pressure relief portion 25 conducting the electrode terminal 24 and causing the electrode terminal 24 to short-circuit when the battery cell 20 is thermally runaway can be reduced, and the performance stability of the battery cell 20 can be improved; at the same time, the end cover 21 tends to be flat relative to the case 22, and the thickness of the end cover 21 is relatively thick. The pressure relief portion 25 is arranged on the end cover 21, which can reduce the risk of the design of the pressure relief portion 25 being limited by the thickness of the setting position, and can improve the design flexibility of the pressure relief portion 25 and the processing accuracy of the pressure relief portion 25. In addition, the end cover 21 that tends to be flat facilitates the processing of the pressure relief portion 25, can improve the processing convenience of the pressure relief portion 25, and is also conducive to improving the processing accuracy of the pressure relief portion 25. The overall battery cell 20 improves the performance reliability of the battery cell 20 by improving the reliability of the pressure relief portion 25.

In some embodiments, please continue to refer to Fig. 3 and further refer to Fig. 4, FIG. 4 is a schematic structural diagram of the end cover of the battery cell shown in FIG. 3, and a first groove 214 is provided on the side of the end cover 21 away from the electrode assembly 23, and the pressure relief portion 25 is provided on the bottom wall of the first groove 214.

Specifically, a first groove 214 is provided on the side of the end cover 21 away from the electrode assembly 23, and along the thickness direction of the end cover 21 (Z direction shown in Fig. 3 and Fig. 4), the first groove 214 is recessed in the direction close to the electrode assembly 23, and the pressure relief portion 25 is provided on the bottom wall of the first groove 214.

As mentioned above, there are many implementation structures of the pressure relief portion 25. For example, the pressure relief portion 25 disposed on the bottom wall of the groove may be formed with a local thinning area (such as the notch 251 shown in Fig. 4. The pressure relief portion 25 forms a weak area in the area where the notch 251 is disposed. When the battery cell 20 has thermal runaway, the pressure relief portion 25 can be cracked along the notch 251 to release the internal pressure of the battery cell 20). Certainly, the shape structure of the local thinning area is not limited to the notch 251.

It should be noted that the pressure relief portion 25 and the end cover 21 can be in an integrated structure or a split structure. If the pressure relief portion 25 and the end cover 21 are in an integrated structure, the end cover 21 can be made by stamping or extrusion molding, and the groove bottom wall of the first groove 214 on the end cover 21 is directly processed into a thinning area; if the pressure relief portion 25 and the end cover 21 are in a split structure, a mounting hole that penetrates the first groove 214 along the thickness direction of the end cover 21 can be first set on the end cover 21, and then the pressure relief portion 25 can be installed on the groove bottom wall of the first groove 214 and the mounting hole is blocked.

A first groove 214 is formed on the side of the end cover 21 away from the electrode assembly 23 and is recessed into the interior of the battery cell 20. The pressure relief portion 25 is provided on the bottom wall of the first groove 214. The pressure relief portion 25 is provided in the concave area of the end cover 21, which can play a certain protective role on the pressure relief portion 25, reduce the risk of the pressure relief portion 25 being worn or damaged by the external environment, and thus reduce the risk of the pressure relief portion 25 opening the valve in advance, and reduce the risk of the pressure relief pressure required by the pressure relief portion 25 rising due to the pressure relief portion 25 being blocked by other components, improve the functional stability of the pressure relief portion 25, which is in turn conducive to improving the performance reliability of the battery cell 20 during use.

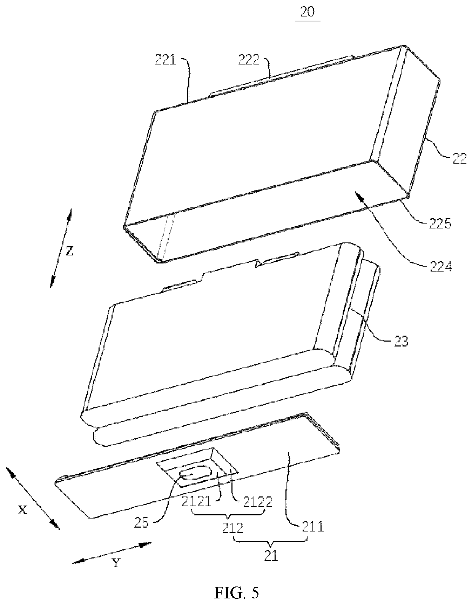

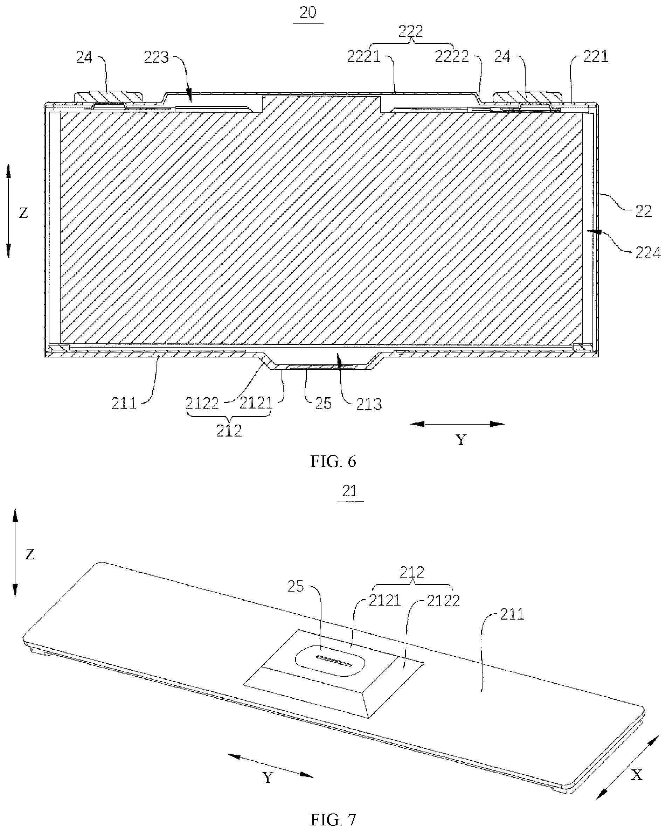

In some other embodiments, please refer to Fig. 5 and Fig. 6, Fig. 5 is an exploded view of the battery cell provided in some embodiments of the present application in some other embodiments, and Fig. 6 is a front sectional view of the battery cell shown in Fig. 5 in some embodiments. The end cap 21 includes a cover body 211 and a first protrusion 212, the cover body 211 is arranged around the first protrusion 212, and the first protrusion 212 protrudes from the cover body 211 in a direction away from the inside of the case.

That is, the end cap 21 includes a cover body 211 for covering the opening 225 of the case 22 and a first protrusion 212 protruding from the cover body 211, the cover body 211 has an outer surface away from the electrode assembly 23, and the first protrusion 212 protrudes from the cover body 211 along the direction away from the inside of the case (Z direction shown in Fig. 5 and Fig.6).

The shape of the first protrusion 212 can be any conventional or unconventional shape such as a cylinder, a prism, a cone, etc., and the embodiment of the present application is not limited to this. Exemplarily, as shown in Fig. 5, the first protrusion 212 is of a square table structure, and the cross-section of the first protrusion 212 gradually decreases along the direction from the electrode assembly 23 to the cover body 211. The first protrusion 212 of this shape can guide the grouping installation of the battery cells 20, reduce the initial installation position accuracy requirements of the battery cells 20, and improve the convenience of grouping.

It can be understood that the first protrusion 212 and the cover body 211 can be integrally formed, or can be separately provided and connected to each other by welding, bonding, screwing, etc. Exemplarily, the first protrusion 212 and the cover body 211 are integrally formed.

The first protrusion 212 is provided on the side of the end cover 21 away from the electrode assembly 23. In the grouping of the battery 100, the first protrusion 212 on the end cover 21 and the box 10 of the battery 100 or other battery cell 20 bearing parts can be used to limit the battery cell 20 by using a concave-convex matching structure, which is conducive to improving the positioning stability of the battery cell 20.

In some embodiments, as shown in Fig. 6, the first protrusion 212 includes a first top wall 2121 and a first side wall 2122, the first side wall 2122 is arranged around the first top wall 2121, the first side wall 2122 connects the first top wall 2121 and the cover body 211, and the first top wall 2121 and the first side wall 2122 enclose a first concave cavity 213 communicated with the accommodating space 224.

Specifically, the cover body 211 and the first top wall 2121 are arranged at intervals, the first side wall 2122 is arranged around the first top wall 2121 and connects the first top wall 2121 and the cover body 211, the first top wall 2121 and the first side wall 2122 enclose a first concave cavity 213 open toward one end of the cover body 211, so that the first concave cavity 213 is communicated with the accommodating space 224.

It can be understood that the shape of the first top wall 2121 can be any conventional shape such as a circle, a rectangle, or any special shape. Exemplarily, the first top wall 2121 is in a rectangular shape.

The first side wall 2122 can extend toward the cover body 211 along any direction intersecting with the plane where the first top wall 2121 is located. Exemplarily, along the direction in which the first top wall 2121 points to the cover body 211, the cross-section of the first concave cavity 213 gradually increases. That is, the first side wall 2122 gradually extends outward from the first top wall 2121.

The first concave cavity 213 expands the internal space of the battery cell 20, that is, expands the accommodating space 224, and increases the effective volume of the battery cell 20 without increasing the external size of the overall battery 100, which is beneficial to improving the energy density of the battery cell 20.

In some embodiments, please continue to refer to Fig. 5 and Fig. 6, and further refer to Fig. 7, Fig. 7 is a schematic structural diagram of the end cover of the battery cell shown in Fig. 5 in some embodiments, and the pressure relief portion 25 is arranged on the first top wall 2121.

The first top wall 2121 and the first side wall 2122 enclose the first concave cavity 213, the first concave cavity 213 is communicated with the accommodating space 224, the pressure relief portion 25 is arranged on the first top wall 2121, and the first concave cavity 213 can play a certain convergence role. When the battery cell 20 has thermal runaway, the first concave cavity 213 can provide a buffer zone for the discharge, which is beneficial to the smooth discharge of the discharge, thereby improving the performance reliability of the battery cell 20.

Certainly, in some other embodiments, the pressure relief portion 25 can also be provided at any position of the first side wall 2122, and the position of the first pressure relief portion 25 can be flexibly set according to factors such as the different shapes of the first protrusion 212 and the pressure relief direction requirements.

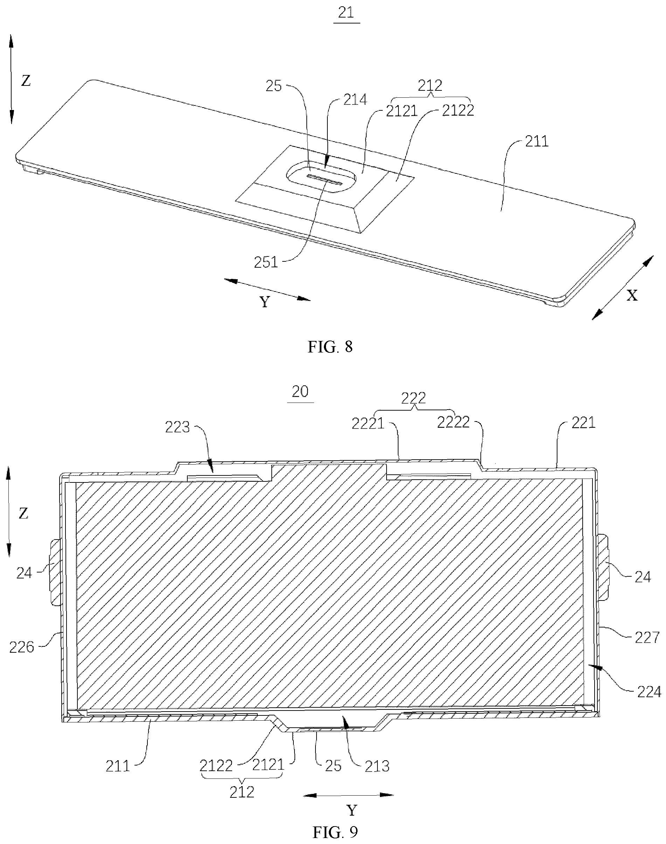

In some embodiments, please refer to Fig. 7 and further refer to Fig. 8, Fig. 8 is a structural schematic diagram of the end cover of the battery cell shown in Fig. 5 in some other embodiments, the first top wall 2121 is provided with a first groove 214 on the side away from the inside of the case, and the pressure relief portion 25 is provided on the bottom wall of the groove 214.

That is, the pressure relief portion 25 can be provided at the end of the first protrusion 212 away from the cover body 211, and is sunken relative to the first top wall 2121.

As mentioned above, the pressure relief portion 25 provided on the bottom wall of the first groove 214 may be formed with a local thinning area (such as a notch 251, the pressure relief portion 25 forms a weak area in the area where the notch 251 is disposed, and when the battery cell 20 has thermal runaway, the pressure relief portion 25 can be cracked along the notch 251 to release the internal pressure of the battery cell 20). Certainly, the shape structure of the local thinning area is not limited to the notch 251.

Exemplarily, the pressure relief portion 25 provided on the bottom wall of the first groove 214 is formed with a notch 251, and the shape of the notch 251 is not uniquely limited in the embodiment of the present application. As shown in Fig. 8, the notch 251 may be a linear notch 251.

The pressure relief portion 25 is provided in the concave area of the first protrusion 212, which can play a certain protective role on the pressure relief portion 25, reduce the risk of the pressure relief portion 25 being worn or damaged by the external environment, and thus reduce the risk of the pressure relief portion 25 opening the valve in advance, and reduce the risk of the pressure relief pressure required by the pressure relief portion 25 rising due to the pressure relief portion 25 being blocked by other components, improve the functional stability of the pressure relief portion 25, which is in turn conducive to improving the performance reliability of the battery cell 20 during use.

In some embodiments, please refer to Fig. 5 and Fig. 6 again, the case 22 includes a first wall 221 and a second protrusion 222, the first wall 221 is arranged around the second protrusion 222, and the second protrusion 222 protrudes from the first wall 221 in a direction away from the interior of the case.

That is, the case 22 includes a first wall 221, and the second protrusion 222 is formed on the side of the first wall 221 away from the electrode assembly 23, and the second protrusion 222 protrudes from the outer surface of the first wall 221.

It can be understood that the case 22 can be of a structure with an accommodating space 224 and an opening 225 of any shape, and the first wall 221 can be any wall portion of the case 22. For example, the case 22 can include a bottom wall and a side wall arranged around the bottom wall, and the bottom wall is arranged opposite to the end cover 21. The first wall 221 can be the bottom wall of the case 22 or the side wall of the case 22.

Similar to the first protrusion 212, the shape of the second protrusion 222 can be any conventional or unconventional shape such as a cylinder, a prism, or a cone, and the embodiment of the present application does not limit this. Exemplarily, the second protrusion 222 can be of a square cone structure like the first protrusion 212, and the cross-section of the second protrusion 222 can be gradually reduced along the direction from the inner surface of the first wall 221 to the outer surface of the first wall 221. The second protrusion 222 of this shape can guide the grouping installation of the battery cells 20, reduce the initial installation position accuracy requirements of the battery cells 20, and improve the convenience of grouping.

It can be understood that the second protrusion 222 and the case 22 can be integrally formed, or they can be separately provided and connected to each other by welding, bonding, screwing, etc. Exemplarily, the second protrusion 222 is integrally formed with the case 22.

Based on the implementation form of "the end cover 21 includes a cover body 211 and a first protrusion 212", the cover body 211 is provided with a first protrusion 212, and the case 22 is provided with a second protrusion 222. The first protrusion 212 and the second protrusion 222 are located at different positions of the battery cell 20, and the battery cell 20 can be limited at multiple points.

The outer surface of the case 22 is provided with a second protrusion 222. In grouping of the battery 100, the second protrusion 222 on the case 22 and the box 10 of the battery 100 or the peripheral components of other battery cells 20 can be used to limit the battery cells 20 by adopting a concave-convex matching structure, which is conducive to improving the positioning stability of the battery cells 20.

In some embodiments, as shown in Fig. 6, the second protrusion 222 includes a second top wall 2221 and a second side wall 2222, the second side wall 2222 is arranged around the second top wall 2221, the second side wall 2222 connects the second top wall 2221 and the first wall 221, and the second top wall 2221 and the second side wall 2222 enclose a second concave cavity 223 communicated with the accommodating space 224.

Specifically, the first wall 221 and the second top wall 2221 are spaced apart, the second side wall 2222 is arranged around the second top wall 2221 and connects the second top wall 2221 and the first wall 221, and the second top wall 2221 and the second side wall 2222 enclose a second concave cavity 223 open toward one end of the first wall 221, so that the second concave cavity 223 is communicated with the accommodating space 224.

It can be understood that the shape of the second top wall 2221 can be any conventional shape such as a circle, a rectangle, or any special shape. Exemplarily, the second top wall 2221 is in a rectangular shape.

The second side wall 2222 can extend toward the first wall 221 along any direction intersecting with the plane where the second top wall 2221 is located. Exemplarily, along the direction from the second top wall 2221 to the first wall 221, the cross-section of the second cavity 223 gradually increases. That is, the second side wall 2222 gradually extends outward from the second top wall 2221.

he second cavity 223 also expands the internal space of the battery cell 20, that is, expands the accommodating space 224, and increases the effective volume of the battery cell 20 without increasing the external dimensions of the overall battery 100, which is beneficial to improve the energy density of the battery cell 20.

In some embodiments, as shown in Fig. 6, the electrode terminal 24 is provided on the first wall 221.

That is, the electrode terminal 24 and the second protrusion 222 can be provided on the same wall portion (first wall 221) of the case 22, and the electrode terminal 24 and the second protrusion 222 can be arranged on the first wall 221 along any direction perpendicular to the thickness direction of the first wall 221.

As mentioned above, the battery cell 20 can be provided with two electrode terminals 24, the two electrode terminals 24 are respectively a positive terminal and a negative terminal, and the second protrusion 222 and the two electrode terminals 24 can be arranged in a linear manner, for example, the second protrusion 222 can be located on one side of the two electrode terminals 24, or can be located between the two electrode terminals 24. Certainly, the second protrusion 222 and the two electrode terminals 24 can also be scattered on the first wall 221.

In some embodiments, as shown in Fig. 6, there are two electrode terminals 24, the two electrode terminals 24 are arranged at intervals on the first wall 221, and the second protrusion 222 is located between the two electrode terminals 24.

Further, the two electrode terminals 24 can be arranged in any direction parallel to the plane where the first wall 221 is located. For example, as shown in Fig. 6, the two electrode terminals 24 can be arranged at intervals along the length direction (Y direction) of the first wall 221.

The second protrusion 222 is arranged at a position between the two electrode terminals 24. The second protrusion 222 fully utilizes the space between the two electrode terminals 24, further improving the rationality of space utilization.

Generally, the electrode terminal 24 protrudes from the mounting surface. The electrode terminal 24 and the second protrusion are arranged on the same wall portion of the case 22, which is conducive to fully utilizing the external space of the battery cell 20 without increasing the peripheral size of the battery cell 20 as much as possible, improving the space utilization rate, and thus improving the energy density of the battery 100 using the battery cell 20.

It can be understood that the height of the electrode terminal 24 protruding from the first wall 221 can be the same as or different from the height of the second protrusion 222 protruding from the first wall 221.

In some embodiments, the height of the second protrusion 222 protruding from the first wall 221 is less than or equal to the height of the electrode terminal 24 protruding from the first wall 221.

Specifically, the height of the second protrusion 222 protruding from the first wall 221 can be less than the height of the electrode terminal 24 protruding from the first wall 221, or can be equal to the height of the electrode terminal 24 protruding from the first wall 221. That is, the second protrusion 222 does not extend beyond the electrode terminal 24 in a direction perpendicular to the plane where the first wall 221 is located (Z direction shown in Fig. 6).

The height of the second protrusion 222 protruding from the outer surface of the case 22 is less than the height of the electrode terminal 24 protruding from the outer surface of the case 22, which can reduce the risk of the second protrusion 222 interfering with the electrode terminal 24, and reduce the risk of the second protrusion 222 overlapping the current collector electrically connected to the electrode terminal 24, thereby reducing the risk of short-circuit caused by overlapping the current collector of the case 22, and improving the performance reliability of the battery cell 20.

In some embodiments, please refer to Fig. 3 and Fig. 5 again, the case 22 includes a first wall 221, the electrode terminal 24 is provided on the first wall 221, and the first wall 221 is arranged opposite to the end cover 21.

Specifically, the pressure relief portion 25 is provided on the end cover 21, the electrode terminal 24 is provided on the first wall 221 of the case 22 arranged opposite to the end cover 21, and the electrode terminal 24 and the pressure relief portion 25 are provided at opposite ends of the battery cell 20.

In some embodiments, the end cover 21 can be configured to support the electrode assembly 23, that is, as shown in Fig. 5, the end cover 21 of the battery cell 20 can be provided toward the ground or downward or toward the bottom of the box 10, so that the end cover 21 can support the electrode assembly 23 in the Z direction, and the end of the battery cell 20 provided with the electrode terminal 24 can be disposed facing the top of the box 10 or upward.

In some other embodiments, the first wall 221 of the case 22 may be configured to support the electrode assembly 23, that is, as shown in Fig. 3, the first wall 221 of the case 22 provided with the electrode terminal 24 may be arranged toward the ground or downward or toward the bottom of the box 10, so that the first wall 221 can support the electrode assembly 23 in the Z direction, and the end cap 21 of the battery cell 20 may be arranged facing the top of the box 10 or upward.

The electrode terminal 24 and the pressure relief portion 25 are arranged on opposite sides of the battery cell 20, and the pressure relief direction of the pressure relief portion 25 is away from the electrode terminal 24, further reducing the risk of the short-circuit of the electrode terminal 24 due to the conductive discharge discharged through the pressure relief portion 25 conducting the electrode terminal 24 when the battery cell 20 is in thermal runaway, thereby improving the performance reliability of the battery cell 20.

In some other embodiments, please refer to Fig. 9, which is a front cross-sectional view of the battery cell shown in FIG. 5 in some other embodiments, the case 22 includes a second wall 226 and a third wall 227 that are arranged opposite to each other, and two electrode terminals 24 are provided, one of which is provided on the second wall 226, and the other is arranged on the third wall 227.

Specifically, two electrode terminals 24 are provided, and the two electrode terminals 24 are respectively arranged on two oppositely arranged wall portions of the case 22.

It can be understood that the two electrode terminals 24 can be respectively arranged on any two oppositely arranged wall portions of the case 22.

Exemplarily, please refer to Fig. 5 and further Fig. 9, the case 22 may include a bottom wall (first wall 221) and a side wall arranged around the bottom wall, the opening 225 of the case 22 is opposite to the bottom wall of the case 22, the end cover 21 covers the opening 225 of the case 22 and is arranged opposite to the bottom wall of the case 22, and the side wall of the case 22 includes a second wall 226 and a third wall 227 arranged oppositely in the Y direction and two fourth walls connecting the second wall 226 and the third wall 227 and arranged oppositely in the X direction. One of the electrode terminals 24 is arranged on the second wall 226, and the other electrode terminal 24 is arranged on the third wall 227.

The two electrode terminals 24 of the battery cell 20 are arranged on different surfaces, which is conducive to improving the structural flexibility and structural diversity of the battery cell 20.

Some other embodiments of the present application further provide a battery 100, which includes any of the battery cells 20 described above.

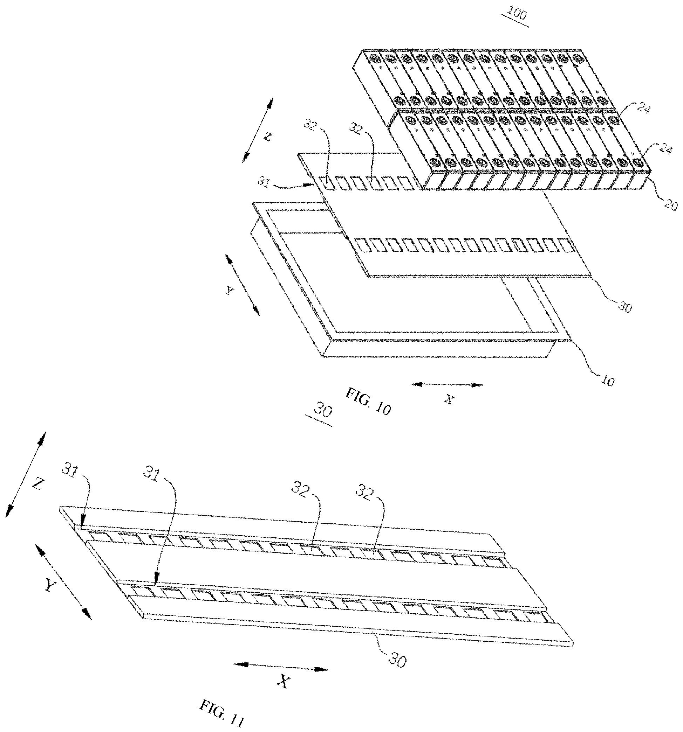

In some further embodiments, please refer to Fig. 10, which is an exploded view of the battery provided in some further embodiments of the present application. The battery 100 further includes a support member 30, which is arranged on the side of the end cover 21 away from the case 22, and the support member 30 is configured to support the battery cell 20.

Specifically, the support member 30 is configured to support the battery cell 20, and the support member 30 can be arranged at the bottom of the battery cell 20. The support member 30 can have a bearing surface facing the battery cell 20, and the end of the battery cell 20 provided with the end cover 21 is arranged facing the bearing surface of the support member 30.

The support member 30 may be implemented in a variety of forms. The support member 30 may be a block-shaped, plate-shaped or other separately arranged structure. Certainly, in some other embodiments, the support member 30 may be integrated into the box 10 for accommodating the battery cell 20.

In some embodiments, as shown in Fig. 10, the support member 30 is a flat plate structure, and the thickness direction of the support member 30 (Z direction shown in Fig, 10) is parallel to the thickness direction of the end cover 21. The plate-shaped support member 30 is conducive to reducing the space occupied by the support member 30, and the flat plate structure of the support member 30 can provide a larger bearing surface, which can increase the bearing capacity of the battery cell 20, and is overall conducive to improving the energy density of the battery 100.

Herein, the material of the support member 30 may be a metal material such as copper, iron, steel, aluminum alloy, etc.

Based on the implementation form of "the end cover 21 includes a cover body 211 and a first protrusion 212", the bearing surface of the support member 30 can be formed with a recess corresponding to the position of the first protrusion 212. When the battery 100 is grouped, the first protrusion 212 can be partially or completely inserted into the recess on the support member 30 to play an auxiliary limiting role for the battery cell 20.

The battery 100 is provided with a support member 30, and the support member 30 carries and installs the battery cell 20, which is conducive to improving the structural stability of the overall structure of the battery 100.

It can be understood that one support member 30 can only carry one battery cell 20, and one support member 30 can also carry two, three or even more battery cells 20.

In some further embodiments, as shown in Fig. 10 , a plurality of battery cells 20 are provided, and the plurality of the battery cells 20 are arranged along a first direction (the X direction shown in Fig. 10), and the support member 30 is located on one side of the battery cell 20 along a second direction (the Z direction shown in Fig. 10 ), and the first direction is perpendicular to the second direction.

That is, the plurality of the battery cells 20 are arranged along a first direction (the X direction shown in Fig. 10), and the support member 30 is located on one side of the plurality of the batteries 100 along a second direction (the Z direction shown in Fig. 10) to support the plurality of the battery cells 20.

The battery 100 is provided with a plurality of battery cells 20, and the plurality of the battery cells 20 are arranged on the support member 30, which is conducive to improving the structural integrity of the battery 100 and the energy density of the battery 100.

In some further embodiments, please refer to Fig. 10, and further refer to Fig. 11, which is a schematic structural diagram of the support member provided in some further embodiments of the present application. The support member 30 shown in Fig. 10 and the support member 30 shown in Fig. 11 are reversed in top and bottom. The support member 30 is formed with a second groove 31, and the second groove 31 is interconnected with the pressure relief port formed after the pressure relief portion 25 is opened. The second groove 31 is configured to guide the discharge discharged from the pressure relief port to be discharged out of the battery.

Specifically, the pressure relief portion 25 is provided on the end cover 21, the end cover 21 faces the support member 30, and the pressure relief portion 25 also faces the support member 30. When the battery cell 20 has thermal runaway, the discharge discharged through the pressure relief portion 25 is discharged in the direction close to the support member 30. The support member 30 is formed with a second groove 31 which is interconnected with the pressure relief port formed after the pressure relief portion 25 is opened. The discharge discharged through the pressure relief port can be discharged into the second groove 31 and circulate in the second groove 31. By designing the extension path of the second groove 31, the discharging of the discharge can be guided, so that the discharge can circulate in the second groove 31 and finally be discharged from the battery along the extension direction of the second groove 31, so that the pressure relief of the pressure relief portion 25 is smooth, and the support member 30 is prevented from interfering with the pressure relief of the pressure relief portion 25.

By planning the shape and extension direction of the second groove 31, the discharging of the discharge can be guided, the smoothness and orientation of pressure relief of the pressure relief portion 25 are improved, and the performance reliability of the battery 100 is improved.

It can be understood that the shape and extension direction of the second groove 31 can be flexibly designed according to the arrangement direction of the battery cells 20 or the discharge direction requirements of the entire battery 100. The second groove 31 can be a linear groove, a U-shaped groove, a circuitous groove, etc. The end of the second groove 31 can be formed at a preset pressure relief position so that the discharge flows through the second groove 31 and is discharged from the battery 100 through the end of the second groove 31. The end position of the second groove 31 can be flexibly formed according to the pressure relief requirements. At the same time, the number of second grooves 31 can also be flexibly set according to the number of battery cells 20 or the arrangement of battery cells 20. For example, only one second groove 31 can be formed, and the second groove 31 is interconnected with the pressure relief port formed after the pressure relief portions 25 of all battery cells 20 are opened. There may also be a plurality of second grooves 31, and each second groove 31 can only be interconnected with the pressure relief port formed after the pressure relief portions 25 of some battery cells 20 of the battery 100 are opened.

In addition, the second groove 31 can be directly formed on the surface of the support member 30 facing the end cover 21, and the second groove 31 faces the pressure relief portion 25. Certainly, the second groove 31 can also be formed inside the support member 30. In this case, the position of the support member 30 corresponding to the pressure relief portion 25 can be formed with a channel communicated with the inner cavity of the support member 30, and the channel is communicated with the pressure relief port formed after the pressure relief portion 25 is opened and the inner cavity of the support member 30.

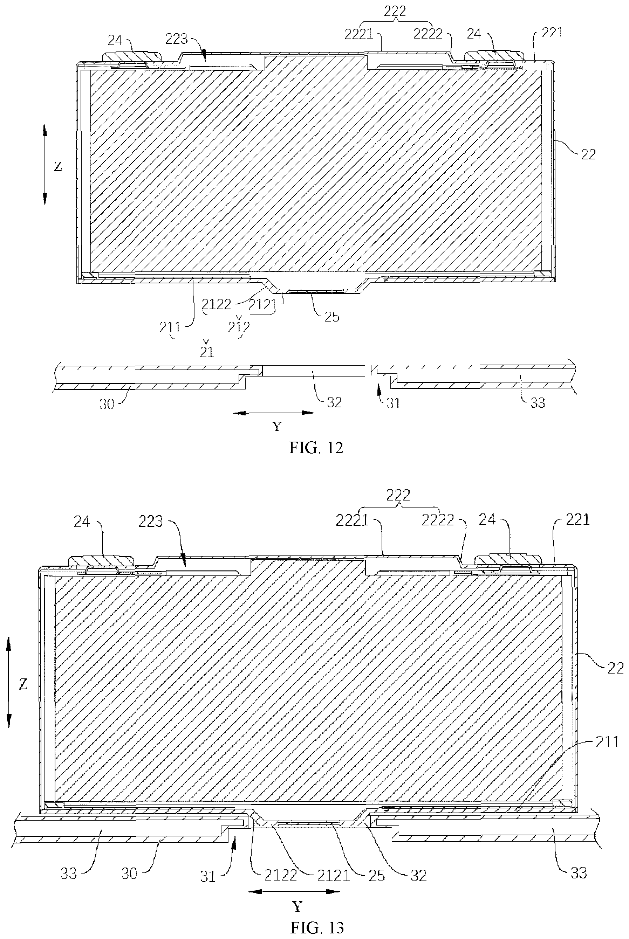

In some further embodiments, please continue to refer to Fig. 10 and Fig. 11, and further refer to Fig. 12 to Fig, 13. Fig. 12 is a front sectional view of the support member and the battery cell in a separated state provided in some further embodiments of the present application; Fig. 13 is a front sectional view of the first protrusion of the battery cell provided in some further embodiments of the present application partially inserted into the through hole of the support member. The second groove 31 is formed on the side of the support member 30 away from the battery cell 20, the support member 30 is formed with a through hole 32, and the through hole 32 is communicated with the pressure relief port and the second groove 31.

That is, the second groove 31 is formed on the side of the support member 30 away from the battery cell 20, and the support member 30 can play the role of isolating the battery cell 20 and the discharge.

Since the pressure relief portion 25 and the second groove 31 are arranged on opposite sides of the support member 30, the support member 30 is formed with a through hole 32 that penetrates the support member 30, one end of the through hole 32 is communicated with the second groove 31, and the other end faces the pressure relief portion 25. The through hole 32 can be communicated with the pressure relief port formed after the pressure relief portion 25 is opened and the second groove 31.

It can be understood that the position of the through hole 32 can correspond to the position of the pressure relief portion 25, so as to shorten the trajectory of the discharge entering the second groove 31 as much as possible.

The second groove 31 is formed on the side of the support member 30 away from the battery cell 20, so that the support member 30 can timely isolate the discharge and the battery cell 20, and the discharge discharged through the pressure relief portion 25 can be discharged from the battery 100 away from the battery cell 20, thereby reducing the risk of damaging the battery cell 20 due to the contact between the discharge and the battery cell 20, thereby improving the performance reliability of the battery 100.

According to the number of battery cells 20, the through hole 32 can also be flexibly formed. For example, when there is one battery cell 20, only one through hole 32 can be formed. When multiple battery cells 20 are provided, one through hole 32 can correspond to only one pressure relief portion 25 of the battery cell 20, and one through hole 32 can also correspond to two, three or even more pressure relief portions 25 of the battery cells 20.

It can be understood that when the number of through holes 32 is multiple, each through hole 32 is communicated with the second groove 31.

In some further embodiments, as shown in Fig. 12 and Fig. 13, the end cover 21 includes a cover body 211 and a first protrusion 212, the cover body 211 is provided around the first protrusion 212, the first protrusion 212 protrudes from the cover body 211 in a direction away from the inside of the case, the first protrusion 212 includes a first top wall 2121 and a first side wall 2122, the first side wall 2122 is arranged around the first top wall 2121, the first side wall 2122 connects the first top wall 2121 and the cover body 211, and the pressure relief portion 25 is provided on the first top wall 2121; at least part of the first side wall 2122 is inserted into the through hole 32.

The implementation form of the first protrusion 212 is as described above, and will not be repeated here. Specifically, the first top wall 2121 of the first protrusion 212 is spaced apart from the cover body 211, and the pressure relief portion 25 is provided on the first top wall 2121.

At least part of the first side wall 2122 is inserted into the through hole 32, that is, the first protrusion 212 can be inserted into the through hole 32 only at one end away from the cover body 211, or the first protrusion 212 can be inserted into the through hole 32 entirely. Because the pressure relief portion 25 is provided at the end of the first protrusion 212 (the first top wall 2121), when at least part of the first side wall 2122 is inserted into the through hole 32, the pressure relief portion 25 can also be inserted into the through hole 32.

It can be understood that after the first protrusion 212 is inserted into the through hole 32, the first protrusion 212 may protrude from the surface of the support member 30 away from the battery cell 20, or the first protrusion 212 may not protrude from the surface of the support member 30 away from the battery cell 20.

The pressure relief portion 25 is provided on the first protrusion 212 on the end cover 21 and is located at the end of the first protrusion 212 away from the end cover 21. At the same time, at least part of the first protrusion 212 is inserted into the through hole 32 on the support member 30. In an aspect, the insertion of the first protrusion 212 into the through hole 32 of the support member 30 can play a certain limiting role on the battery cell 20, thereby improving the stability of the relative position of the battery cell 20 and the support member 30; in another aspect, the first protrusion 212 plays a certain guiding role in the pressure relief of the pressure relief portion 25, thereby being capable of guiding the discharge discharged from the pressure relief port more fully, stably and quickly to the second groove 31, reducing the risk of the discharge being retained on the side of the support member 30 facing the battery cell 20, and further improving the reliability of the battery 100; in still another aspect, the insertion of the first protrusion 212 into the through hole 32 can play a role in sealing the through hole 32 to a certain extent, or at least can play a role in reducing the gap between the first protrusion 212 and the through hole 32, thereby reducing the risk of the discharge discharged into the second groove 31 flowing back through the through hole 32, which is also beneficial to improving the reliability of the battery 100.

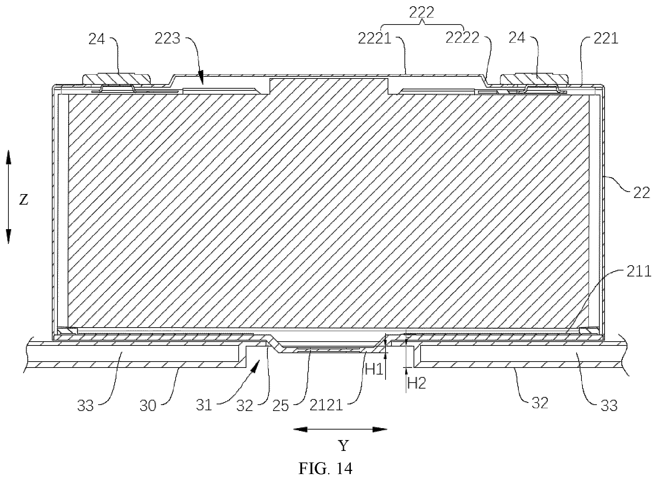

In some further embodiments, please refer to Fig. 12, and further refer to Fig. 14, which is a front view of the first protrusion of the battery cell protruding from the bottom wall of the second groove provided in some further embodiments of the present application. The first top wall 2121 protrudes from the bottom wall of the second groove 31.

As mentioned above, the through hole 32 is communicated with the second groove 31, and the first top wall 2121 protrudes from the groove bottom wall of the second groove 31, that is, the opening surface of the through hole 32 can be located at the groove bottom wall of the second groove 31, and one end of the first protrusion 212 inserted into the through hole 32 can pass through the through hole 32 through the opening surface of the through hole 32 and be exposed in the second groove 31.

It can be understood that the pressure relief portion 25 is provided on the first top wall 2121, and the first top wall 2121 protrudes from the groove bottom wall of the second groove 31, and the pressure relief portion 25 also protrudes from the groove bottom wall of the second groove 31. When the battery cell 20 is thermally runaway, the pressure relief portion 25 is opened to form a pressure relief port, and the discharge can be directly discharged into the second groove 31 after being discharged through the pressure relief port. This helps to improve the stability of the limitation of the battery cell 20 while improving the adequacy of the guided discharging of the discharge, which is conducive to further improving the reliability of the battery 100.

In some further embodiments, as shown in Fig. 14, the height H1 of the first top wall 2121 protruding from the bottom wall of the second groove 31 is less than the depth H2 of the second groove 31.

Specifically, along the Z direction in Fig. 14, the first top wall 2121 does not extend out of the second groove 31, and there is a certain gap between the first top wall 2121 and the surface of the support member 30.

The height H1 of the first top wall 2121 protruding from the bottom wall of the second groove 31 is less than the depth H2 of the second groove 31, so that the pressure relief portion 25 can be accommodated in the second groove 31. On the one hand, it is prevented that other structures outside the second groove 31 block the pressure relief portion 25 or block the pressure relief port of the pressure relief portion 25 to affect the normal pressure relief of the pressure relief portion 25; on the other hand, the second groove 31 can play a certain protective role on the pressure relief portion 25, reducing the risk of the pressure relief portion 25 being worn or damaged by the external environment. The overall structure is conducive to improving the performance reliability of the battery 100 during use.

In some further embodiments, please refer to Fig. 10 and Fig. 11 again, there are a plurality of the battery cells 20 and a plurality of the through holes 32, and the through holes 32 and the pressure relief portions 25 of the battery cells 20 are provided in one-to-one correspondence.

As described above, when a plurality of the battery cells 20 are provided, one through hole 32 may correspond to the pressure relief portions 25 of two, three or even more battery cells 20, or one through hole 32 may correspond to only one pressure relief portion 25 of a battery cell 20 (i.e., the through hole 32 and the pressure relief portion 25 of the battery cell 20 are provided in one-to-one correspondence).

That is, the number of through holes 32 and the battery cell 20 is the same, and both are provided in plurality, and the plurality of the through holes 32 are all communicated with the second groove 31. Each through hole 32 is communicated with the pressure relief port formed after the pressure relief portion 25 of a battery cell 20 is opened and the second groove 31.

The pressure relief portions 25 and the through holes 32 are arranged in a one-to-one correspondence, which is conducive to improving the smoothness of the pressure relief of all battery cells 20 of the battery 100, and improving the flow conductivity of the second groove 31, reducing the risk of a large amount of discharge backflow caused by one through hole 32 corresponding to multiple pressure relief portions 25, thereby improving the reliability of the battery 100.

It can be understood that multiple battery cells 20 can be arranged in a certain order on the support member 30, for example, a plurality of the battery cells 20 can be arranged in a linear, annular, S-shaped, etc. Certainly, multiple battery cells 20 can also be scattered on the support member 30.

In some further embodiments, as shown in Fig. 10 and Fig. 11, a plurality of the battery cells 20 are arranged along the first direction, the second groove 31 extends along the first direction, and at least one end of the second groove 31 extends to the edge of the support member 30.

As shown in Fig. 10, a plurality of the battery cells 20 are arranged along a first direction (the X direction shown in Fig. 10), and the first direction is parallel to the plane where the bearing surface of the support member 30 is located.

When a plurality of the battery cells 20 are arranged along the first direction, the pressure relief portions 25 of the plurality of the battery cells 20 are also arranged along the first direction, and a plurality of the through holes 32 are also arranged along the first direction. The plurality of the through holes 32 are all communicated to the second groove 31, and the second groove 31 may be a strip groove extending along the first direction. As shown in Fig. 11, the length direction of the second groove 31 may also extend along the first direction, so that one second groove 31 can be communicated to a plurality of the through holes 32 at the same time.

In order to allow the discharge to be discharged from the support member 30, both ends of the second groove 31 along the first direction may extend to the edge of the support member 30, so that the discharge can be discharged through the two side edges of the support member 30. Certainly, one end of the second groove 31 may also extend to the edge of the support member 30, so that the discharge can be discharged through the end of the support member 30 extending to the edge of the support member.

The second groove 31 extends to the edge of the support member 30 along the arrangement direction of the battery cells 20. On the one hand, one second groove 31 can discharge the discharge corresponding to a plurality of the battery cells 20, which is conducive to reducing the number of second grooves 31 on the support member 30. On the other hand, the second groove 31 extends to the edge of the support member 30, which is convenient for the discharge in the second groove 31 to be discharged from the battery 100 in time, which is conducive to improving the pressure relief of the battery cells 20, thereby improving the reliability of the battery 100.

In some further embodiments, please refer to Fig. 12, a heat exchange cavity 33 for accommodating a heat exchange medium is provided in the support member 30.

The heat exchange cavity 33 can be used to accommodate a heat exchange medium to adjust the temperature of a plurality of the battery cells 20, and the heat exchange medium is accommodated in the heat exchange cavity 33. The heat exchange medium here can be a liquid or a gas, and adjusting the temperature means heating or cooling the plurality of the battery cells 20. In the case of cooling or lowering the temperature of the battery cells 20, the heat exchange cavity 33 is used to contain a cooling medium to lower the temperature of the plurality of the battery cells 20. The heat exchange medium contained therein can also be referred to as a cooling medium, and more specifically, can be referred to as a cooling liquid or a cooling gas. In addition, the heat exchange cavity 33 of the support member 30 can also be used for heating to increase the temperature of the plurality of the battery cells 20, and the embodiment is not limited to this. Exemplarily, the heat exchange cavity 33 of the support member 30 contains a cooling liquid to lower the temperature of the plurality of the battery cells 20.

It can be understood that when the heat exchange cavity 33 contains a cooling medium, it can not only lower the temperature of the battery cells 20, but also lower the temperature of the discharged discharge when the battery cells 20 are thermally runaway.

The heat exchange cavity 33 can have a variety of implementation forms. For example, the support member 30 can be of a hollow structure, and the inner cavity of the support member 30 forms the heat exchange cavity 33. For another example, one or more flow channels can be formed inside the support member 30, and the flow channels form the heat exchange cavity 33.

A heat exchange cavity 33 for accommodating a heat exchange medium is formed in the support member 30. The support member 30 can adjust the temperature of the battery cell 20 while carrying the battery cell 20, which is also beneficial to improving the performance reliability of the battery 100. In addition, the support member 30 is provided on the side of the battery cell 20 where the pressure relief portion 25 is provided. The support member 30 contains a cooling medium, which can timely cool down the discharge discharged through the pressure relief portion 25, improve the pressure relief safety of the battery 100, and thus improve the performance reliability of the battery 100.

In some embodiments, as shown in Fig. 10, the battery 100 further includes a box 10, and the battery cell 20 and the support member 30 are stored in the box 10.

As mentioned above, the box 10 can have a variety of implementation structures. The box 10 of the embodiment of the present application can be any conventional container that can accommodate the battery cell 20 and the support member 30.

The battery 100 includes a box 10, and the box 10 plays a role in storing and protecting the battery cell 20 and the support member 30, thereby improving the structural integrity of the battery 100 and the performance reliability of the battery 100.

Some embodiments of the present application further provide an electrical device, which can include any of the above battery cells 20, and the battery cell 20 is used to provide electric energy; or, the electrical device can include any of the above batteries 100, and the battery 100 is used to provide electric energy.

Herein, the electrical device can be any of the aforementioned devices or systems that use the battery 100 or the battery cell 20.

Referring to Fig. 5 to Fig. 9, some embodiments of the present application provide a battery cell 20, which includes a case 22, an electrode assembly 23, an end cap 21, an electrode terminal 24 and a pressure relief portion 25. The case 22 has an accommodating space 224 and an opening 225 communicated with the accommodating space 224. The electrode assembly 23 is accommodated in the accommodating space 224. The end cap 21 closes the opening 225. The electrode terminal 24 is provided in the case 22 and is electrically connected to the electrode assembly 23. The pressure relief portion 25 is provided in the end cap 21. The pressure relief portion 25 is used to release the internal pressure of the case 22.

Herein, the end cap 21 includes a cover body 211 and a first protrusion 212. The cover body 211 is provided around the first protrusion 212. The first protrusion 212 protrudes from the cover body 211 in a direction away from the interior of the case. The first protrusion 212 includes a first top wall 2121 and a first side wall 2122, the first side wall 2122 is arranged around the first top wall 2121, the first side wall 2122 connects the first top wall 2121 and the cover body 211, and the first top wall 2121 and the first side wall 2122 enclose a first concave cavity 213 communicated with the accommodating space 224. A first groove 214 is formed on the side of the first top wall 2121 away from the inside of the case, and the pressure relief portion 25 is provided on the groove bottom wall of the first groove 214.

The case 22 includes a first wall 221, and a second protrusion 222 is formed on the side of the first wall 221 away from the electrode assembly 23, and the second protrusion 222 protrudes from the outer surface of the first wall 221. The second protrusion 222 includes a second top wall 2221 and a second side wall 2222. The second side wall 2222 is provided around the second top wall 2221. The second side wall 2222 connects the second top wall 2221 and the first wall 221. The second top wall 2221 and the second side wall 2222 enclose a second concave cavity 223 communicated with the accommodating space 224. Two electrode terminals 24 are provided. The two electrode terminals 24 are arranged at intervals on the first wall 221. The second protrusion 222 is located between the two electrode terminals 24. The height of the second protrusion 222 protruding from the first wall 221 is less than or equal to the height of the electrode terminal 24 protruding from the first wall 221.

Referring to Fig. 5 to Fig. 14, some embodiments of the present application provide a battery 100, including a support member 30 and a plurality of battery cells 20, each of which includes a case 22, an electrode assembly 23, an end cap 21, an electrode terminal 24, and a pressure relief portion 25, the case 22 has an accommodating space 224 and an opening 225 communicated with the accommodating space 224, the electrode assembly 23 is accommodated in the accommodating space 224, the end cap 21 closes the opening 225, the electrode terminal 24 is provided in the case 22 and is electrically connected to the electrode assembly 23, the pressure relief portion 25 is provided in the end cap 21, and the pressure relief portion 25 is used to release the internal pressure of the case 22. The end cap 21 includes a cover body 211 and a first protrusion 212, the cover body 211 is provided around the first protrusion 212, and the first protrusion 212 protrudes from the cover body 211 in a direction away from the interior of the case. The first protrusion 212 includes a first top wall 2121 and a first side wall 2122. The first side wall 2122 is arranged around the first top wall 2121. The first side wall 2122 connects the first top wall 2121 and the cover body 211. The first top wall 2121 and the first side wall 2122 enclose a first concave cavity 213 communicated with the accommodating space 224. A first groove 214 is formed on the side of the first top wall 2121 away from the inside of the case, and the pressure relief portion 25 is provided on the groove bottom wall of the first groove 214.

A plurality of battery cells 20 are arranged along a first direction, and a support member 30 is provided on one side of the plurality of the battery cells 20 along a second direction. The first direction is perpendicular to the second direction. At the same time, the support member 30 is located on the side of the end plate away from the case 22, and the support member 30 is of a flat plate structure. The thickness direction of the support member 30 is parallel to the thickness direction of the end cover 21.

A second groove 31 is formed on the side of the support member 30 away from the battery cell 20. The second groove 31 is configured to guide the discharge discharged from the pressure relief port to be discharged out of the battery. The support member 30 is formed with a plurality of through holes 32. The plurality of the through holes 32 correspond one-to-one to the pressure relief portions 25 of the plurality of the battery cells 20. Each through hole 32 connects the pressure relief port formed after the pressure relief portion 25 is opened and the second groove 31. Both ends of the second groove 31 along the first direction extend to the two side edges of the support member 30 along the first direction. Herein, at least part of the first side wall 2122 is inserted into the through hole 32. A heat exchange cavity 33 for accommodating a heat exchange medium is provided in the support member 30.

It should be noted that, in the absence of conflict, the embodiments and features in the embodiments of the present application can be combined with each other.

Although the present application has been described with reference to the preferred embodiment, various improvements can be made thereto and components thereof can be replaced with equivalents without departing from the scope of the present application. In particular, as long as there is no structural conflict, the various technical features mentioned in each embodiment can be combined in any way. The present application is not limited to the specific embodiments disclosed herein, but includes all technical solutions falling within the scope of the claims.

## Claims

1. A battery cell, comprising:
a case, having an accommodating space and an opening communicated with the accommodating space;
an electrode assembly, accommodated in the accommodating space;
an end cover, closing the opening;
an electrode terminal, provided in the case, wherein the electrode terminal is electrically connected to the electrode assembly; and
a pressure relief portion, provided in the end cover, wherein the pressure relief portion is configured to release an internal pressure of the case.

2. The battery cell according to claim 1, wherein a first groove is formed on a side of the end cover away from the electrode assembly, and the pressure relief portion is provided on a groove bottom wall of the first groove.

3. The battery cell according to claim 1, wherein the end cover comprises a cover body and a first protrusion, the cover body is provided around the first protrusion, and the first protrusion protrudes from the cover body in a direction away from an interior of the case.

4. The battery cell according to claim 3, wherein the first protrusion comprises a first top wall and a first side wall, the first side wall is arranged around the first top wall, the first side wall connects the first top wall and the cover body, and the first top wall and the first side wall enclose a first concave cavity communicated with the accommodating space.

5. The battery cell according to claim 4, wherein the pressure relief portion is provided on the first top wall.

6. The battery cell according to claim 5, wherein a first groove is formed on a side of the first top wall away from the interior of the case, and the pressure relief portion is provided on a groove bottom wall of the first groove.

7. The battery cell according to any one of claims 1-6, wherein the case comprises a first wall and a second protrusion, the first wall is provided around the second protrusion, and the second protrusion protrudes from the first wall in a direction away from an interior of the case.

8. The battery cell according to claim 7, wherein the second protrusion comprises a second top wall and a second side wall, the second side wall is arranged around the second top wall, the second side wall connects the second top wall and the first wall, and the second top wall and the second side wall enclose a second concave cavity communicated with the accommodating space.

9. The battery cell according to claim 7 or 8, wherein the electrode terminal is provided on the first wall.

10. The battery cell according to claim 9, wherein a height of the second protrusion protruding from the first wall is less than or equal to a height of the electrode terminal protruding from the first wall.

11. The battery cell according to claim 9 or 10, wherein two electrode terminals are provided, the two electrode terminals are provided at intervals on the first wall, and the second protrusion is located between the two electrode terminals.

12. The battery cell according to any one of claims 1-11, wherein the case comprises a first wall, the electrode terminal is provided on the first wall, and the first wall is arranged opposite to the end cover.

13. The battery cell according to any one of claims 1-8, wherein the case comprises a second wall and a third wall arranged opposite to each other, and two electrode terminals are provided, wherein one of the electrode terminals is provided on the second wall, and the other of the electrode terminals is provided on the third wall.

14. A battery, comprising the battery cell according to any one of claims 1-13.

15. The battery according to claim 14, further comprising:
a support member, provided on a side of the end cover away from the case, and the support member is configured to support the battery cell.

16. The battery according to claim 15, wherein a plurality of battery cells are provided, and the plurality of the battery cells are arranged along a first direction, and the support member is located on a side of the battery cell along a second direction, and the first direction is perpendicular to the second direction.

17. The battery according to claim 15 or 16, wherein the support member is formed with a second groove, and the second groove is communicated with a pressure relief port formed after the pressure relief portion is opened, and the second groove is configured to guide a discharge discharged from the pressure relief port to be discharged out of the battery.

18. The battery according to claim 17, wherein the second groove is formed on a side of the support member away from the battery cell, and the support member is formed with a through hole, and the through hole communicates the pressure relief port with the second groove.

19. The battery according to claim 18, wherein the end cover comprises a cover body and a first protrusion, the cover body is provided around the first protrusion, the first protrusion protrudes from the cover body in a direction away from an interior of the case, the first protrusion comprises a first top wall and a first side wall, the first side wall is arranged around the first top wall, the first side wall connects the first top wall and the cover body, and the pressure relief portion is provided on the first top wall,
wherein at least part of the first side wall is inserted into the through hole.

20. The battery according to claim 19, wherein the first top wall protrudes from a groove bottom wall of the second groove.

21. The battery according to claim 20, wherein a height of the first top wall protruding from the groove bottom wall of the second groove is less than a depth of the second groove.

22. The battery according to any one of claims 18-21, wherein a plurality of the battery cells and a plurality of the through holes are provided, and the through holes and the pressure relief portions of the battery cells are provided in one-to-one correspondence.

23. The battery according to claim 22, wherein the plurality of the battery cells are arranged along a first direction, the second groove extends along the first direction, and at least one end of the second groove extends to an edge of the support member.

24. The battery according to any one of claims 15-23, wherein a heat exchange cavity for accommodating a heat exchange medium is provided in the support member.

25. The battery according to any one of claims 15-24, wherein the support member is of a flat plate structure, and a thickness direction of the support member is parallel to a thickness direction of the end cover.

26. The battery according to any one of claims 15-25, further comprising:
a box, wherein the battery cell and the support member are received in the box.

27. An electrical device, comprising a battery cell according to any one of claims 1-13 for providing electrical energy; or, comprising a battery according to any one of claims 14-26 for providing electrical energy.
